# EUROPEAN PATENT APPLICATION

(11) **EP 3 929 913 A1**
(43) Date of publication of application: **29.12.2021**
(21) Application number: 20758584.5
(22) Date of filing: 18.02.2020
(51) Int. Cl.: G10L 13/00, G10H 7/08

(54) **SOUND SIGNAL SYNTHESIS METHOD, GENERATIVE MODEL TRAINING METHOD, SOUND SIGNAL SYNTHESIS SYSTEM, AND PROGRAM**

(30) Priority: 20.02.2019 JP 2019028683
(71) Applicant: YAMAHA CORPORATION, Hamamatsu-shi Shizuoka, 430-8650 (JP)
(72) Inventor: NISHIMURA, Masanari, Hamamatsu-shi, Shizuoka 430-8650 (JP)
(74) Representative: Hoffmann Eitle
(86) International application number: PCT/JP2020/006161
(87) International publication number: WO 2020/171035

(57) **Abstract**

A computer-implemented sound signal synthesis method generates control data including pitch notation data indicative of a pitch name corresponding to a pitch of a sound signal to be synthesized and octave data indicative of an octave of the pitch of the sound signal; and estimates output data indicative of the sound signal by inputting the generated control data into a generative model that has learned a relationship between control data including pitch notation data indicative of a pitch name corresponding to a pitch of a reference signal to be synthesized and octave data indicative of an octave of the pitch of the reference signal and output data indicative of the reference signal.

## Description

### TECHNICAL FIELD

The present invention relates to sound source technology for synthesizing sound signals.

### BACKGROUND ART

There have been proposed sound sources that use neural networks (hereafter, "NNs") to generate sound waveforms in accordance with input conditions (hereafter, "Deep Neural Network (DNN) sound sources"), such as an NSynth described in Patent Document 1 or a Neural Parametric Singing Synthesizer (NPSS) described in Non-Patent Document 1. The NSynth generates a sample of a sound signal for each sample cycle in accordance with embedding (embedding vector). The Timbre model of the NPSS generates a spectrum of a sound signal for each frame, depending on pitch and timing information.

### Related Art Document

Patent Document

Patent Document 1 US Patent Publication No. 10,068,557

### Non-Patent Document

Non-Patent Document 1 Merlijn Blaauw, Jordi Bonada, "A Neural Parametric Singing Synthesizer Modeling Timbre and Expression from Natural Songs," Appl. Sci. 2017, 7, 1313

### SUMMARY OF THE INVENTION

### Problem to be Solved by the Invention

There has been proposed a one-hot representation as a form of pitch data representative of pitches. The one-hot representation is a method of representing pitches using n bits (n is a natural number equal to or greater than two) corresponding to different pitches. For example, in a one-hot vector representing a single pitch, one bit corresponding to that pitch is set as "1" among the n bits consisting of the pitch data, and each of the remainder (N-1) bits is set as "0."

In the NSynth in Patent Document 1, pitch data in one-hot style are input to the WaveNet mode, and a series of samples is then generated in accordance with the pitch data. The NPSS in Non-patent Document 1 inputs pitch data in one-hot style into an F0 model, to generate a trajectory of the pitch F0. A series of spectral envelopes is then generated in accordance with the trajectory of F0. Pitch data in one-hot style, however, have a large number of dimensions, equivalent to a total number of scales in a pitch range of a sound signal to be generated, and thus has a drawback in that a scale of the DNN source is increased.

In sound production systems in nature, sounds in different octaves tend to be generated by a cohesive physical structure, such as that of human vocal organs or sound production mechanisms of wind instruments. Conventional DNN sound sources have been unsuccessful in utilizing common features inherent in sounds in different octaves.

Thus, an object of the present disclosure is to generate high-quality sound signals in a wide range of pitches at a relatively small scale, by utilizing common features of sounds in different octaves.

### Means of Solving the Problems

A sound signal synthesis method according to one aspect of the present disclosure generates control data including pitch notation data indicative of a pitch name corresponding to a pitch of a sound signal to be synthesized and octave data indicative of an octave of the pitch of the sound signal; and estimates output data indicative of the sound signal by inputting the generated control data into a generative model that has learned a relationship between control data including pitch notation data indicative of a pitch name corresponding to a pitch of a reference signal to be synthesized and octave data indicative of an octave of the pitch of the reference signal and output data indicative of the reference signal.

A training method of a generative model according to one aspect of the present disclosure prepares a reference signal with a pitch, pitch notation data indicative of a pitch name corresponding to the pitch, and octave data indicative of an octave of the pitch; and trains the generative model such that the generative model generates output data indicative of the reference signal based on control data including the pitch notation data and the octave data.

A sound signal synthesis system according to one aspect of the present disclosure includes one or more processors; and one or more memories. The one or more memories are configured to store a generative model that has learned a relationship between control data and output data. The control data includes pitch notation data indicative of a pitch name corresponding to a pitch of a reference signal and octave data indicative of an octave of the pitch of the reference signal, and the output data indicates the reference signal. The one or more processors are configured to: generate control data that include pitch notation data indicative of a pitch name corresponding to a pitch of a sound signal to be synthesized and octave data indicative of an octave of the pitch of the sound signal; and estimate output data indicative of the sound signal by inputting the generated control data into the generative model.

A program according to one aspect of the present disclosure causes a computer to function as a generation controller configured to generate control data including pitch notation data indicative of a pitch name corresponding to a pitch of a sound signal to be synthesized and octave data indicative of an octave of the pitch of the sound signal; and a generator configured to estimate output data indicative of the sound signal by inputting the generated control data into a generative model that has learned a relationship between control data including pitch notation data indicative of a pitch name corresponding to a pitch of a reference signal to be synthesized and octave data indicative of an octave of the pitch of the reference signal and output data indicative of the reference signal.

### BRIEF DESCRIPTION OF THE DRAWINGS

FIG. 1 is a block diagram illustrating a hardware configuration of a sound signal synthesis system.
FIG. 2 is a block diagram illustrating a functional structure of the sound signal synthesis system.
FIG. 3 is a diagram explaining pitch notation data and octave data.
FIG. 4 is a diagram explaining a process of a trainer and a generator.
FIG. 5 is flowchart showing a preparation process.
FIG. 6 is a flowchart showing a generation process of a sound of a sound production unit.

### MODES FOR CARRYING OUT THE INVENTION

### A: First Embodiment

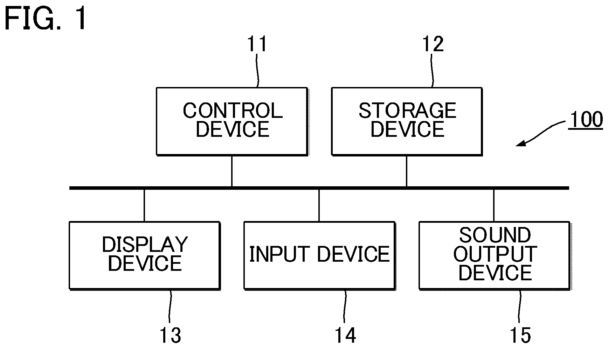

FIG. 1 is a block diagram illustrating a structure of a sound signal synthesis system 100 of the present disclosure. The sound signal synthesis system 100 is realized by a computer system that includes a control device 11, a storage device 12, a display device 13, an input device 14, and a sound output device 15. The sound signal synthesis system 100 is an information terminal, such as a portable phone, smartphone, or personal computer. The sound signal synthesis system 100 can be realized as a single device, or as a plurality of separately configured devices (e.g., a server-client system).

The control device 11 comprises one or more processors that control each of the elements that constitute the sound signal synthesis system 100. Specifically, the control device 11 is constituted of one or more of different types of processors, such as a Central Processing Unit (CPU), Sound Processing Unit (SPU), Digital Signal Processor (DSP), Field Programmable Gate Array (FPGA), Application Specific Integrated Circuit (ASIC), or the like. The control device 11 generates a time-domain sound signal V that represents a waveform of the synthesis sound.

The storage device 12 comprises one or more memories that store programs executed by the control device 11 and various data used by the control device 11. The storage device 12 comprises a known recording medium, such as a magnetic recording medium or a semiconductor recording medium, or a combination of multiple types of recording media. It is of note that a storage device 12 may be provided separate from the sound signal synthesis system 100 (e.g., cloud storage), and the control device 11 may write and read data to and from the storage device 12 via a communication network, such as a mobile communication network or the Internet. In other words, the storage device 12 may be omitted from the sound signal synthesis system 100.

The display device 13 displays calculation results of a program executed by the control device 11. The display device 13 is, for example, a display. The display device 13 may be omitted from the sound signal synthesis system 100.

The input device 14 accepts a user input. The input device 14 is, for example, a touch panel. The input device 14 may be omitted from the sound signal synthesis system 100.

The sound output device 15 plays sound represented by a sound signal V generated by the control device 11. The sound output device 15 is, for example, a speaker or headphones. For convenience, a D/A converter, which converts the sound signal V generated by the control device 11 from digital to analog format, and an amplifier, which amplifies the sound signal V, are not shown. In addition, although Fig. 1 illustrates a configuration in which the sound output device 15 is mounted to the sound signal synthesis system 100, the sound output device 15 may be provided separate from the sound signal synthesis system 100 and connected to the sound signal synthesis system 100 either by wire or wirelessly.

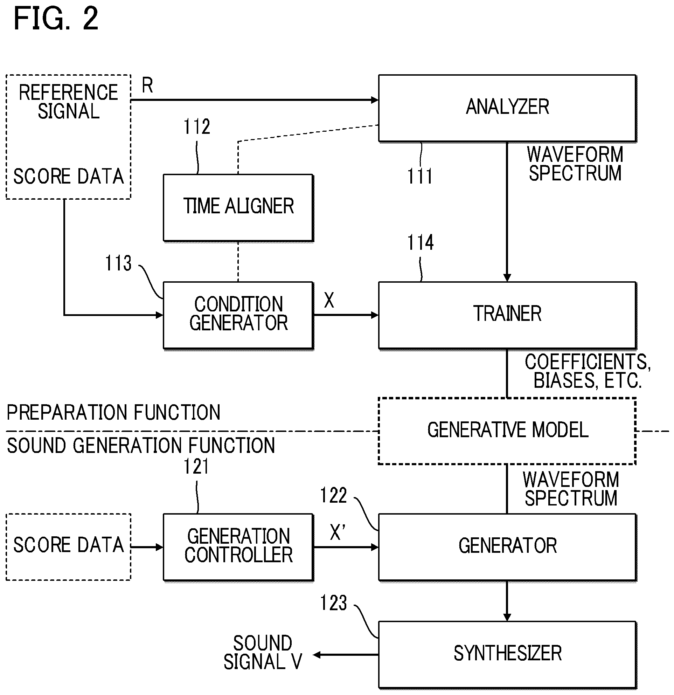

FIG. 2 is a block diagram showing a functional configuration of the sound signal synthesis system 100. By executing a program stored in the storage device 12, the control device 11 realizes a generative function (a generation controller 121, a generator 122, and a synthesizer 123) that generates, by use of a generative model, a time-domain sound signal V representative of a sound waveform, such as a voice of a singer singing a song or a sound of an instrument being played. Furthermore, by executing a program stored in the storage device 12, the control device 11 realizes a preparation function (an analyzer 111, a time aligner 112, a condition generator 113, and a trainer 114) for preparing a generative model used for generating sound signals V. The functions of the control device 11 may be realized by a set of multiple devices (i.e., a system), or some or all of the functions of the control device 11 may be realized by dedicated electronic circuitry (e.g., signal processing circuitry).

Description will first be given of pitch name and octave data; a generative model that generates output data in accordance with pitch notation data and octave data; and reference signals R used to train the generative model.

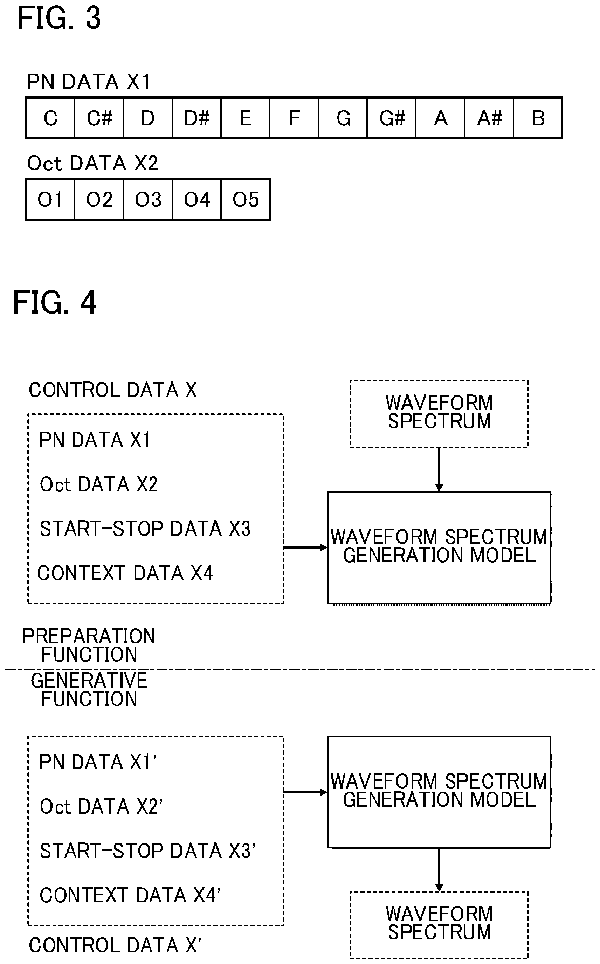

A pair of the pitch data and the octave data represent the pitch of a sound signal V. The pitch notation data (hereafter, "PN data") X1 indicate a name of the pitch ("C," "C#," "D," ... "A#," "B") of a sound signal V from among the 12 sounds of different pitches corresponding to respective 12 chromatic scales within one octave. The octave data (hereafter, "Oct data") X2 indicate an octave (indicate a number of octaves that exist relative to the reference octave) to which the pitch of the sound signal V belongs among different octaves. As illustrated in Fig. 3, the PN data X1 and the Oct data X2 may each be in one-hot style, examples of which are described in the following.

The PN data X1 consist of 12 bits corresponding to different pitch names. Of the 12 bits constituting the PN data X1, one bit corresponding to the pitch name of a sound signal V is set as "1" and the other 11 bits are set as "0." The Oct data X2 consist of five bits corresponding to different octaves (O1 to O5). Of the five bits constituting the Oct data X2, one bit corresponding to an octave that includes the pitch of the sound signal V is set as "1" and the other four bits are set as "0." The Oct data X2 of the first embodiment are 5-bit data corresponding to 5 octaves; however, a number of octaves that can be represented by the Oct data X2 may be freely selected. The Oct data X2 representing any of n octaves (n is a natural number equal to or greater than 1) consist of n bits.

The generative model is a statistical model for generating a series of waveform spectra (e.g., mel spectrogram) of a sound signal V in accordance with the control data X, which include the PN data X1 and the Oct data X2. The control data X specify conditions of a sound signal V to be synthesized. The characteristics of the generative model are defined by more than one variable (coefficients, biases, etc.,) stored in the storage device 12. The statistical model is a neural network used for estimating waveform spectra. The neural network may be of a regression type, such as WaveNet (TM), which estimates a probability density distribution of a current sample based on previous samples of the sound signal V. The algorithm may be freely selected. For example, the algorithm may be a Convolutional-Neural-Network (CNN) type, a Recurrent-Neural-Network (RNN) type, or a combination of the two. Furthermore, the algorithm may be of a type that includes an additional element, such as Long Short-Term Memory (LSTM) or ATTENTION. The variables of the generative model are established by training based on training data prepared by the preparation function (described later). The generative model in which the variables are established is used to generate the sound signal V in the generative function (described later).

To train the generative model, there are stored in the storage device 12 multiple pairs of a sound signal (hereafter, "reference signal") R and score data, the reference signal R being indicative of a time-domain waveform of a score played by a player, and the score data being representative of the score. The score data in one pair include a series of notes. The reference signal R corresponding to the score data in the same pair contains a series of waveform segments corresponding to the series of notes of the score represented by the score data. The reference signal R comprises a series of samples of sample cycles (e.g., at a sample rate of 48 kHz) and is a time-domain signal representative of a sound waveform. The performance of the score may be realized by human instrumental playing, by singing by a singer, or by automated instrumental playing. Generation of a high-quality sound by machine learning generally requires a large volume of training data obtained by advance recording of a large number of sound signals of a target instrument or a target player, etc., for storage in the storage device 12 as reference signals R.

The preparation function illustrated in the upper section of Fig. 2 is described below. The analyzer 111 calculates, for each of reference signals R corresponding to different scores, a frequency-domain spectrum (hereafter, a "waveform spectrum") for each frame on a time axis for each reference signal R that is in correspondence with a score. For example, a known frequency analysis, such as a discrete Fourier transform, is used to calculate a waveform spectrum of the reference signal R.

The time aligner 112 aligns, based on information such as waveform spectra obtained by the analyzer 111, start and end points of each of sound production units in score data for each reference signal R, with start and end points of a waveform segment corresponding to a sound production unit in the reference signal R. A sound production unit comprises, for example, a single note having a specified pitch and a specified sound duration. A single note may be divided into more than one sound production units by dividing the note at a point where waveform characteristics, such as those of tone, change.

The condition generator 113 generates, based on the information of the sound production units of the score data, timings of which are aligned with those in each reference signal R, control data X for each time t in each frame to output the generated control data X to the trainer 114, the control data X corresponding to the waveform segment of the time t in the reference signal R. The control data X specify the conditions of a sound signal V to be synthesized, as described above. The control data X include PN data X1, Oct data X2, start-stop data X3, and context data X4, as illustrated in Fig. 4. The PN data X1 represent the pitch name of a pitch in the corresponding waveform segment of the reference signal R. The Oct data X2 represent the octave to which the pitch belongs. In other words, the pitch of a waveform segment in a reference signal R is represented by a pair of PN data X1 and Oct data X2. The start-stop data X3 represent the start (attack) and end (release) periods of each waveform segment. The context data X4 of one frame in a waveform segment corresponding to one note represent relations (i.e., context) between different sound production units, such as a difference in pitch between the note and a previous or following note, or information representative of a relative position of the note within the score. The control data X may also contain other information such as that pertaining to instruments, singers, or techniques.

As a result of the processing by the analyzer 111 and the condition generator 113, pieces of sound production unit data for training a generative model that generates a sound signal V in a predetermined pitch range are prepared from pairs of a reference signal R and score data. Each piece of sound production unit data comprises a pair of control data X generated by the condition generator 113 and a waveform spectrum generated by the analyzer 111. The pieces of sound production unit data are divided, prior to training by the trainer 114, into a training dataset for training the generative model and a test dataset for testing the generative model. A majority of the sound production unit data are used as a training dataset with the remainder being used as a test dataset. Training with the training dataset is performed by dividing the pieces of sound production unit data into batches, with each batch consisting of a predetermined number of frames, and the training is performed on a per-batch-basis in order for all the batches.

As illustrated in the upper section of Fig. 4, the trainer 114 receives the training dataset to train the generative model by using the waveform spectra of the sound production units and control data X of each batch in order. The generative model estimates, for each frame (time t), output data representative of a waveform spectrum. The output data may indicate a probability density distribution of each of components constituting a waveform spectrum, or may be a value of each component. By inputting the control data X for each of the pieces of the sound production unit data for a whole batch to the generative model, the trainer 114 is able to estimate a series of output data corresponding to the control data X. The trainer 114 calculates a loss function L (cumulative value for one batch) based on the estimated output data and the corresponding waveform spectrum (ground truth) of the training dataset. Then, the trainer 114 optimizes the variables of the generative model so that the loss function L is minimized. For example, as the loss function L there may be used a cross entropy function or the like in a case that the output data comprise a probability density distribution, and may be used a squared error function or the like in a case that the output data comprise the value of the waveform spectrum. The trainer 114 repeats the above training using the training dataset until the loss function L calculated for the test dataset is reduced to have a sufficiently small value, or the change between two consecutive loss functions L is sufficiently reduced. The generative model thus established has learned the relationship that potentially exists between the control data X for each of the pieces of sound production unit data and the corresponding waveform spectrum. By use of this generative model, the generator 122 is able to generate a high-quality waveform spectrum for control data X' of an unknown sound signal V.

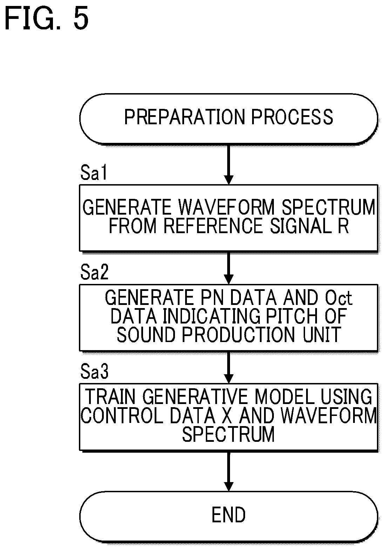

FIG. 5 is a flowchart showing a preparation process. The preparation process is initiated, for example, by an instruction from a user of the sound signal synthesis system 100.

When the preparation process is started, the control device 11 (analyzer 111) generates a waveform spectrum for each waveform segment from each of the reference signals R (Sa1). Next, the control device 11 (time aligner 112 and condition generator 113) generates, from score data that correspond to the waveform segment, control data X including the PN data X1 and the Oct data X2 of a sound production unit that corresponds to the waveform segment (Sa2). The control device 11 (trainer 114) trains a generative model using the control data X for each sound production unit and the waveform spectrum corresponding to the sound production unit, and establishes the variables of the generative model (Sa3).

In the embodiment described above, a configuration in which the pitch is represented by a set of the PN data X1 and the Oct data X2 is given as an example. However, there is also assumed a configuration in which pitch data in one-hot style representative of any of a plurality of pitches over a plurality of octaves (i.e., the pitches amount to a product of 12 chromatic scales and n octaves) are used (hereafter, "comparative example"). In contrast to the comparative example, in the first embodiment, the generative model is trained using as input the control data X including the PN data X1 and the Oct data X2. Therefore, the established generative model is a model that takes advantage of innate commonality of sounds in different octaves. This generative model is able to acquire an ability to generate sound signals V at a smaller scale than that required for a normal generative model trained using the pitch data of the comparative example, and yet attain a quality equivalent to that of the normal generative model. Alternatively, at the same scale as that required for the normal generative model, the generative model of the first embodiment is able to acquire an ability to generate sound signals V of a higher quality than those generated using the normal generative model. Furthermore, in the generative model of the first embodiment, even if training using the reference signal R is not performed for a pitch in a certain octave during training, specifying the pitch using the PN data X1 and the Oct data X2 at the time of generation increases a possibility of a sound signal V representative of the pitch being generated.

Description is next given of a generative function illustrated in the lower section of Fig. 2. The generative function generates sound signals V using the generative model. The generation controller 121 generates control data X' based on information of a series of sound production units represented by score data to be played, and outputs the generated control data X' to the generator 122. The control data X' represent the conditions of the sound production units at respective points in time t of the score data. Specifically, the control data X' include PN data X1', Oct data X2', start-stop data X3', and context data X4'. The control data X' may also include other information, such as that pertaining to instruments, singers, or techniques.

The generator 122 generates a series of waveform spectra in accordance with the control data X' by use of a generative model in which the variables are established, as illustrated in the lower section of Fig. 4. The generator 122 estimates output data indicating a waveform spectrum that accords with the control data X' for each frame (time t) by use of the generative model. In a case that the estimated output data represent the probability density distribution of each of components constituting the waveform spectrum, the generator 122 generates a random number that follows the probability density distribution of the component and outputs the random number as the value of the component of the waveform spectrum. In a case that the estimated output data represent the values of multiple components, the component values are output.

The synthesizer 123 receives a series of the waveform spectra in the frequency domain and synthesizes a sound signal V in the time domain in accordance with the series of the waveform spectra. The synthesizer 123 is a so-called vocoder. For example, the synthesizer 123 synthesizes the sound signal V by obtaining a minimum phase spectrum from a waveform spectrum and then performing an inverse Fourier transform on the waveform spectrum and the phase spectrum. Alternatively, a neural vocoder that has learned the relationship that potentially exists between the waveform spectra and sound signals V is used to directly synthesize the sound signal V from the waveform spectrum.

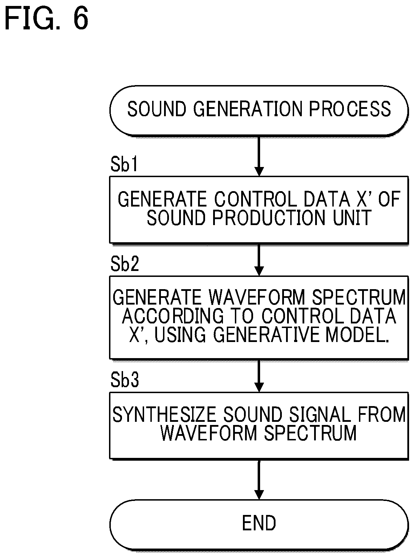

FIG. 6 is a flowchart of a sound generation process for each sound production unit. The sound generation process is started for each sound production unit (e.g., note) represented by the score data each time a time t reaches the start time of the unit. The time t progresses by being triggered by an instruction from a user of the sound signal synthesis system 100, for example.

When the sound generation process for a certain sound production unit is started, the control device 11 (generation controller 121) generates control data X' for that sound production unit based on the score data (Sb1). The control device 11 (generator 122) subsequently generates a waveform spectrum of the sound signal V of that sound production unit in accordance with the generated control data X' by use of the generative model (Sb2). Then, the control device 11 (synthesizer 123) synthesizes the sound signal V of that sound production unit in accordance with the generated waveform spectrum (Sb3). The above process is sequentially performed for the sound production units of the score data, whereby a sound signal V corresponding to the score data is generated. It is of note that in a case that the sound signals V of two consecutive sound production units overlap, the signals are mixed together to calculate a sound signal V.

In the first embodiment, the pitch of a sound signal V to be synthesized is specified by the PN data X1' and the Oct data X2' contained in the control data X'. Consequently, it is possible to generate a high-quality sound signal V in accordance with the control data X' by use of a generative model that is trained and established taking advantage of innate commonality of sounds in different octaves.

### B: Second Embodiment

The generator 122 in the first embodiment generates a waveform spectrum. In contrast, in the second embodiment, the generator 122 generates a sound signal V by use of a generative model. The functional configuration of the second embodiment is basically the same as that shown in Fig. 2, but the synthesizer 123 is not required. The trainer 114 trains the generative model using reference signals R, and the generator 122 generates a sound signal V using the generative model. A piece of sound production unit data used for training in the first embodiment comprises a pair of a piece of control data X and a waveform spectrum. In contrast, a piece of sound production unit data for training in the second embodiment comprises a pair of a piece of control data X for each sound production unit and a waveform segment of a reference signal R (i.e., a sample of the reference signal R).

The trainer 114 of the second embodiment receives the training dataset and trains the generative model by using in order: the control data X; and the waveform segments of the sound production units of each batch of the training dataset. The generative model estimates output data representative of a sample of the sound signal V at each sample cycle (time t). The trainer 114 calculates a loss function L (cumulative value for one batch) based on a series of the output data estimated from the control data X and the corresponding waveform segments of the training dataset, and optimizes the variables of the generative model so that the loss function L is minimized. The generative model thus established has learned relationships that potentially exist between the control data X in each of the pieces of sound production unit data and the waveform segments of the reference signal R.

The generator 122 of the second embodiment generates a sound signal V in accordance with control data X' by use of the established generative model. Thus, the generator 122 estimates, at each sample cycle (time t), output data indicative of a sample of the sound signal V in accordance with the control data X'. In a case that the output data represent a probability density distribution for each of a plurality of samples, the generator 122 generates a random number that follows a probability density distribution of the component and outputs the random number as a sample of the sound signal V. In a case that the output data represent the value of a sample, the sample is output.

### C: Third Embodiment

The first embodiment shown in FIG. 2 illustrates a sound generating function that generates a sound signal V based on the information of a series of sound production units of the score data. However, a sound signal V may be generated in real time based on the information of sound production units supplied from a musical keyboard or the like. Specifically, the generation controller 121 generates control data X for each time t based on the information of one or more sound production units supplied up to that time t. It is not practically possible to include the information of a future sound production unit in the context data X4 contained in the control data X, but the information of a future sound production unit may be predicted from the past information and included in the context data X4.

The PN data X1 and the Oct data X2 in the above embodiments are in the form of one-hot. However, they may be expressed in other formats. For example, either one or both of the PN data X1 and the Oct data X2 may be expressed in coarse representations.

The PN data X1 and the Oct data X2 in the above embodiments are described as having a fixed number of dimensions. However, any number of dimensions may be used. For example, PN data X1 that represent any of numerical values assigned to different pitches may be used, with a number of dimensions of the PN data X1 being smaller than 12 dimensions. The PN data X1 may be used to represent an intermediate pitch between two pitch names, with the number of dimensions of the PN data X1 being larger than 12 dimensions. An extra dimension may also be added to the Oct data X2. The number of dimensions of the Oct data X2 may be changed depending on the octave range of an instrument for which the sound signal V represents the played sound, or the number of dimensions of the Oct data X2 may be fixed to the number of dimensions required to represent the pitch of an instrument with the largest pitch range (compass) from among multiple types of instruments.

A sound signal V to be synthesized by the sound signal synthesis system 100 is not limited to instrumental sounds or voices. The present disclosure may be applied to dynamically control pitches even if a sound signal V to be synthesized is a vocalized animal sound or a natural sound such as that of wind in air or a wave in water.

### Description of Reference Signs

100...sound signal synthesis system, 11...controller, 12...storage device, 13...display device, 14... input device, 15...sound output device, 111...analyzer, 112...time aligner, 113...condition generator, 114...trainer, 121...generation controller, 122...generator, 123...synthesizer.

## Claims

1. A computer-implemented sound signal synthesis method, comprising:
generating control data including pitch notation data indicative of a pitch name corresponding to a pitch of a sound signal to be synthesized and octave data indicative of an octave of the pitch of the sound signal; and
estimating output data indicative of the sound signal by inputting the generated control data into a generative model that has learned a relationship between
control data including pitch notation data indicative of a pitch name corresponding to a pitch of a reference signal to be synthesized and octave data indicative of an octave of the pitch of the reference signal and
output data indicative of the reference signal.

2. The computer-implemented sound signal synthesis method according to claim 1, wherein the octave data included in the generated control data indicates the octave of the pitch of the sound signal in one-hot style.

3. The computer-implemented sound signal synthesis method according to claim 1 or 2, wherein the pitch notation data included in the generated control data indicates the pitch name corresponding to the pitch of the sound signal in one-hot style.

4. The computer-implemented sound signal synthesis method according to any of claims 1 to 3, wherein the output data indicates waveform spectrums of the sound signal to be synthesized.

5. The computer-implemented sound signal synthesis method according to any of claims 1 to 3, wherein the output data indicates samples of the sound signal to be synthesized.

6. A computer-implemented training method of a generative model comprising:
preparing a reference signal with a pitch, pitch notation data indicative of a pitch name corresponding to the pitch, and octave data indicative of an octave of the pitch; and
training the generative model such that the generative model generates output data indicative of the reference signal based on control data including the pitch notation data and the octave data.

7. A sound signal synthesis system comprising:
one or more processors; and
one or more memories,
wherein:
the one or more memories are configured to store a generative model that has learned a relationship between control data and output data, wherein the control data includes pitch notation data indicative of a pitch name corresponding to a pitch of a reference signal and octave data indicative of an octave of the pitch of the reference signal, and wherein the output data indicates the reference signal, and
the one or more processors are configured to:
generate control data that include pitch notation data indicative of a pitch name corresponding to a pitch of a sound signal to be synthesized and octave data indicative of an octave of the pitch of the sound signal; and
estimate output data indicative of the sound signal by inputting the generated control data into the generative model.

8. The sound signal synthesis system according to claim 7, wherein the octave data included in the generated control data indicates the octave of the pitch of the sound signal in one-hot style.

9. The sound signal synthesis system according to claim 7 or 8, wherein the pitch notation data included in the generated control data indicate the pitch name corresponding to the pitch of the sound signal in one-hot style.

10. The sound signal synthesis system according to any of claims 7 to 9, wherein the output data indicates waveform spectrums of the sound signal to be synthesized.

11. The sound signal synthesis system according to any of claims 7 to 9, wherein the output data indicates samples of the sound signal to be synthesized.

12. A program that causes a computer to function as:
a generation controller configured to generate control data including pitch notation data indicative of a pitch name corresponding to a pitch of a sound signal to be synthesized and octave data indicative of an octave of the pitch of the sound signal; and
a generator configured to estimate output data indicative of the sound signal by inputting the generated control data into a generative model that has learned a relationship between
control data including pitch notation data indicative of a pitch name corresponding to a pitch of a reference signal to be synthesized and octave data indicative of an octave of the pitch of the reference signal and
output data indicative of the reference signal.
